# EUROPÄISCHE PATENTANMELDUNG

(11) **EP 1 560 459 A2**
(43) Veröffentlichungstag der Anmeldung: **03.08.2005**
(21) Anmeldenummer: 04103675.7
(22) Anmeldetag: 30.07.2004
(51) Int. Cl.: H04R 1/02

(54) **Vorrichtung zum Schutz der Membran von Lautsprechern**

(30) Priorität: 27.01.2004 DE 202004001166 U
(71) Anmelder: SIEMENS AKTIENGESELLSCHAFT, 80333 München (DE)
(72) Erfinder: Pflaum, Karl-Heinz, 46395, Bocholt (DE); Pieper, Stefan, 45721, Haltern (DE)

(57) **Zusammenfassung**

Es wird eine Vorrichtung zum verbesserten Schutz der Membran (5) eines Lautsprechers (4) eines Geräts (1), beispielsweise eines Fernsprechgeräts, vor zu großen Ausschlägen, hervorgerufen beispielsweise durch das Absaugen des Geräts (1) mit einem Staubsauger, vorgeschlagen, die innerhalb der Fläche der Projektion der Membran (5) auf eine über der Membran (5) angeordnete Abdeckung (2) mit Schallaustrittsöffnungen (3) für den Lautsprecher (4) einen den regulären Betrieb des Lautsprechers (4) gerade unbeeinflusst lassenden Membran-Ausschlagbegrenzer (7) hat, der in jedem Fall mindestens einen durch eine Aufhängung (6) der Membran (5) des Lautsprechers (4) gegebenen maximal möglichen unzerstörenden Ausschlag begrenzt.

## Beschreibung

Die Erfindung betrifft eine Vorrichtung zum Schutz der Membran von Lautsprechern gemäß dem Oberbegriff des Schutzanspruchs 1.

Zum Beispiel bei Telefonen mit elektrodynamischen Schallwandlern, auch als Lautsprecher bezeichnet, kann es beispielsweise beim Kunden beispielsweise durch unsachgemäße Behandlung des Telefons beispielsweise insofern zu einem Totalausfall des Telefons kommen, als die Membran des Lautsprechers zu einem Ausschlag über ein durch die Aufhängung der Membran vorgegebenes maximales Maß hinaus, bis zu dem ein Ausschlag der Membran unschädlich bleibt, veranlasst wird. Ein solcher Fall kann beispielsweise auftreten, wenn das Gerät mit einem Staubsauger abgesaugt wird.

Aufgabe der vorliegenden Erfindung ist es, eine Vorrichtung der eingangs genannten Art anzugeben, durch die ein verbesserter Schutz bezüglich eines überhöhten Ausschlags der Membran eines Lautsprechers gegeben ist.

Diese Aufgabe wird erfindungsgemäß durch eine Vorrichtung gelöst, die das kennzeichnende Merkmal des Schutzanspruchs 1 aufweist.

Danach ist innerhalb der Fläche der Projektion der Membran auf die über der Membran angeordnete Abdeckung mit den Schallaustrittsöffnungen ein den regulären Betrieb des Lautsprechers gerade unbeeinflusst lassender Membran-Ausschlagbegrenzer vorgesehen, der in jedem Fall mindestens den durch die Aufhängung der Membran des Lautsprechers gegebenen maximal möglichen unzerstörenden Ausschlag begrenzt.

Eine solche Vorrichtung erlaubt der Membran und damit auch der Luftspule des Lautsprechers eine maximale Auslenkung dergestalt, dass die Luftspule des Lautsprechers nicht den Luftspalt des Lautsprechers verlassen und damit verklemmen kann. Andererseits verhindert der Ausschlagbegrenzer nicht die reguläre Funktion des Lautsprechers. Der Ausschlagbegrenzer gestattet der Membran des Lautsprechers nach wie vor die notwendige Bewegungsfreiheit.

Vorteilhafte Ausgestaltungen der Erfindung sind Gegenstand von Unteransprüchen.

Danach kann der Ausschlagbegrenzer in einfacher Weise beispielsweise durch wenigstens ein einziges von der Abdeckung in Richtung Membran des Lautsprechers abstehendes stiftartiges Teil gebildet sein. Er kann beispielsweise auch in einfacher Weise durch eine von der Abdeckung in Richtung Membran des Lautsprechers abstehende Ringwand gebildet sein. Der Ausschlagbegrenzer kann also beispielsweise durch eine Hülse oder auch durch Stege gebildet sein. Dabei kann jeweils der Ausschlagbegrenzer zusammen mit dem Gehäuse eines betreffenden Gerätes ein einziges Teil bilden. Der Ausschlagbegrenzer kann aber auch beispielsweise als Zusatzteil zwischen Gehäuse und Lautsprecher angeordnet sein. In jedem Fall aber trägt der Ausschlagbegrenzer der Membrankontur Rechnung. Hierzu weist beispielsweise die Ringwand einen Durchmesser auf, der mindestens so groß ist wie der Kernbereich der Membran.

Die Ausgestaltung des Ausschlagbegrenzers ist in jedem Fall dergestalt, dass die Membran bzw. die Luftspule, die mit der Membran verbunden ist, nicht beschädigt wird. Die Kraft ist also möglichst symmetrisch und auf eine genügend große Fläche verteilt abzufangen. Dabei ist es weiter vorteilhaft, wenn die den Ausschlag der Membran begrenzenden Anschlagflächen des Ausschlagbegrenzers stoßabmildernd und die Membran nicht verletzend ausgebildet sind.

Alles in allem wird durch den Ausschlagbegrenzer die Auslenkung der Membran zwangsweise soweit eingeschränkt, dass es zu keiner Zerstörung des Lautsprechers in Folge eines überhöhten Ausschlags der Membran des Lautsprechers mehr kommt. Durch Einbringen des Ausschlagbegrenzers ins Gehäuse kann diese Funktion praktisch kostenneutral integriert werden. Bei laufenden Produkten kann dem Ausschlagbegrenzer innerhalb der Phase der Wartung oder Reparatur der Herstellungswerkzeuge Rechnung getragen werden.

Nachfolgend wird ein Ausführungsbeispiel der Erfindung anhand einer Zeichnung näher erläutert.

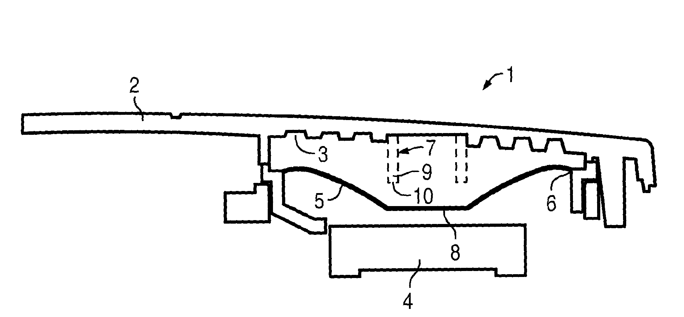

Darin zeigt die einzige Figur in einer Teilansicht einen Schnitt durch ein Gerät 1 mit einer Abdeckung 2, in der Schallaustrittsöffnungen 3 vorgesehen sind, und mit einem Lautsprecher 4, der eine Membran 5 hat. Der Lautsprecher 4 ist unterhalb der Abdeckung 2 angeordnet, und zwar an der Stelle, an der die Abdeckung 2 die Schallaustrittsöffnungen 3 hat.

Die Membran 5 ist mit dem Lautsprecher 4 unter anderem über eine Aufhängung 6 verbunden, durch die die Membran 5 in einem inaktiven Zustand des Lautsprechers 4 in einer Mittelstellung gehalten ist. Im Betrieb des Lautsprechers 4 schwingt die Membran 5 ausgehend von dieser Mittelstellung mit entsprechenden Ausschlägen auf und ab. Die Membran 5 ist dabei über die Aufhängung 6 stets mit dem Lautsprecher 4 verbunden.

Innerhalb der Fläche der Projektion der Membran 5 auf die über der Membran 5 angeordnete Abdeckung 2 mit den Schallaustrittsöffnungen 3 ist ein den regulären Betrieb des Lautsprechers 4 gerade unbeeinflusst lassender Membran-Ausschlagbegrenzer 7 vorgesehen.

Im vorliegenden Ausführungsbeispiel ist dieser Ausschlagbegrenzer 7 durch zwei von der Abdeckung 2 in Richtung Membran 5 des Lautsprechers 4 abstehende stiftartige Teile gebildet. Der Abstand dieser stiftartigen Teile ist im vorliegenden Ausführungsbeispiel so gewählt, dass der Kernbereich 8 der Membran 5 dazwischen passt. Häufig weist dieser Kernbereich 8 eine haubenartige Staubkappe auf, die dann zwischen den stiftartigen Teilen des Ausschlagbegrenzers 7 Platz hat.

In der Figur nicht näher dargestellt ist, dass die freien Enden 9 des Ausschlagbegrenzers 7 als solche Anschlagflächen 10 für die Membran 5 ausgebildet sind, dass sie im Falle eines Anschlags der Membran 5 stoßabmildernd und für die Membran 5 nicht verletzend wirken.

## Patentansprüche

1. Vorrichtung zum Schutz der Membran eines Lautsprechers, der unterhalb einer Schallaustrittsöffnungen aufweisenden Abdeckung eines Geräts angeordnet ist, umfassend eine Aufhängung für die Membran, durch die bis zu einem begrenzten Maß ein Ausschlag der Membran über ein in einem regulären Betrieb des Lautsprechers auftretendes Maß hinaus unschädlich ist, **dadurch gekennzeichnet, dass** innerhalb der Fläche der Projektion der Membran (5) auf die über der Membran (5) angeordnete Abdeckung (2) mit den Schallaustrittsöffnungen (3) ein den regulären Betrieb des Lautsprechers (4) gerade unbeeinflusst lassender Membran-Ausschlagbegrenzer (7) vorgesehen ist.

2. Vorrichtung nach Anspruch 1, **dadurch gekennzeichnet, dass** der Membran-Ausschlagbegrenzer (7) durch wenigstens ein einziges von der Abdeckung (2) in Richtung Membran (5) des Lautsprechers (4) abstehendes stiftartiges Teil gebildet ist.

3. Vorrichtung nach Anspruch 1, **dadurch gekennzeichnet, dass** der Membran-Ausschlagbegrenzer (7) durch eine von der Abdeckung (2) in Richtung Membran (5) des Lautsprechers (4) abstehende Ringwand gebildet ist.

4. Vorrichtung nach Anspruch 3, **dadurch gekennzeichnet, dass** die Ringwand einen Durchmesser aufweist, der mindestens so groß wie der Kernbereich (8) der Membran (5) ist.

5. Vorrichtung nach einem der vorherigen Ansprüche, **dadurch gekennzeichnet, dass** den Ausschlag der Membran (5) begrenzende Anschlagflächen (10) am Ausschlagbegrenzer (7) vorgesehen sind, die für die Membran (5) stoßabmildernd und unverletzend sind.
